# EUROPEAN PATENT SPECIFICATION

(11) **EP 4 440 901 B1**
(45) Date of publication and mention of the grant of the patent: **15.04.2026**
(21) Application number: 21835599.8
(22) Date of filing: 01.12.2021
(51) Int. Cl.: B60W 50/06, B60W 10/04, B60W 10/184, B60W 10/20, B60W 10/22, B60W 60/00, G06F 13/362, H04L 12/403, H04W 40/18, B60W 50/00

(54) **VEHICLE CONTROL BASED ON CASCADED CONTROLLERS WITH CONFIGURABLE BANDWIDTH**
FAHRZEUGSTEUERUNG AUF DER BASIS KASKADIERTER STEUERGERÄTE MIT KONFIGURIERBARER BANDBREITE
COMMANDE DE VÉHICULE BASÉE SUR DES DISPOSITIFS DE COMMANDE EN CASCADE À BANDE PASSANTE CONFIGURABLE

(43) Date of publication of application: 09.10.2024
(73) Proprietor: Volvo Autonomous Solutions AB, 405 08 Göteborg (SE)
(72) Inventor: HELFRICH, Thorsten, 416 60 Göteborg (SE)
(74) Representative: Zacco Sweden AB
(86) International application number: PCT/EP2021/083801
(87) International publication number: WO 2023/098992

(56) References cited:
- WO-A1-2021/144065

## Description

### TECHNICAL FIELD

The present invention relates to path planning and vehicle motion management suitable for autonomous or semi-autonomous heavy-duty vehicles, i.e., coordinated control of motion support devices such as service brakes, propulsion devices and power steering. Although the invention is not restricted to a particular type of vehicle, it can be applied with advantage in autonomously operated heavy-duty vehicles such as trucks, buses, and in construction machines.

### BACKGROUND

Vehicles are becoming ever more complex in terms of mechanics, pneumatics, hydraulics, electronics, and software. A modern heavy-duty vehicle may comprise a wide range of different controllable actuators, such as combustion engines, electric machines, friction brakes, regenerative brakes, shock absorbers, air bellows, and power steering devices. These physical devices are commonly known as Motion Support Devices (MSDs), and they are normally controlled by a plurality of different control units distributed over the vehicle.

To handle the actuator complexity, layered control architectures are often used, where high level controllers send commands to low level controllers, which in turn feed status information and actuator capability data back to the high level controllers. However, getting the different controllers to work together in an efficient and reliable manner is often a challenge. For instance, two control functions at different layers or even at the same layer may start to work against each other, which of course is undesired.

US2019361439A1 relates to systems and methods for controlling an autonomous vehicle. A high-level controller selects a particular combination of sensorimotor primitive modules to be enabled and executed for a particular driving scenario. The high-level controller decides which commands to use and sends instructions to the actuators. All levels of the control system are directly controlled by the high-level controller.

US10591914B2 relates to systems and methods for autonomous vehicle behavior control. A high-level controller generates control signals to a low-level controller that control various actuators. The high-level controller sends commands to control all levels of the control system.

US9915950B2 discloses an autonomous vehicle interface system provided with distributed system nodes for independent data processing of low-level sensor data and/or high-level system data. The autonomous vehicle interface system includes at least one real-time bus for data communications of the low-level sensor data and the high-level system data between the system nodes. The system also includes an application programming interface (API) configured for access by the system nodes to the low-level sensor data and the high-level system data that is published on the real-time bus and accessible via the API.

WO 2021144065A1 also discloses a vehicle management system.

Despite the advancements made to date, there is a need for improved systems for vehicle control, where the actuator control is executed on more than one control unit which cooperate in an efficient and reliable manner to control the heavy-duty vehicle.

### SUMMARY

It is an object of the present invention to provide control systems and methods which facilitate vehicle motion management of a heavy-duty vehicle in a safe, efficient, and robust manner.

This object is at least in part obtained by a control system for motion management of a heavy-duty vehicle. The control system comprises an upper-level control system and a lower-level control system, where the upper-level control system is arranged to obtain a desired motion behavior by the vehicle and to transmit one or more control signals adapted for control of at least one motion support device (MSD) to the lower-level control system in dependence of the desired motion behavior by the vehicle. The one or more control signals transmitted from the upper-level control system to the lower-level control system comprises data indicative of a desired control bandwidth for control of the at least one MSD, such as a measure of a desired responsiveness by the vehicle to the control commands. The lower-level control system is arranged to receive the control signals and to control the at least one MSD in dependence of the desired control bandwidth. The upper-level control system corresponds to an autonomous drive, AD, control function, and the lower-level control system corresponds to a VMM function. The AD control function comprises a first vehicle model configured to model a response by the vehicle to a control signal comprising a given control bandwidth for control of at least one MSD and a trajectory tracking function configured to track a desired vehicle trajectory by optimization of a cost function which is at least partly based on an output of the first vehicle model.

By means of the data indicative of the desired control bandwidth shared between the upper-level control system and the lower-level control system, the upper-level control system can tailor the responsiveness of the vehicle to the current driving scenario and environment. For instance, if the control command is a lane change command to be executed without time constraints and in normal driving conditions, then the desired control bandwidth may be relatively small since aspects like comfort and energy efficiency may be prioritized. However, if the control commands instead relate to an emergency maneuver, the desired control bandwidth may be much larger, i.e., a more responsive vehicle is most likely desired, while comfort and energy efficiency is probably secondary considerations.

The data indicative of the desired control bandwidth which is shared between the upper-level control system and the lower-level control system also allows for controlling cascaded controllers which could otherwise potentially start to interfere with each other. By controlling the bandwidth of the lower-level control algorithms in dependence of what is going on at higher layers in the control stack, the upper-level control system is able to avoid interference between cascaded control loops. The configured control update frequencies and associated control loop bandwidths can, e.g., be determined analytically (by investigating pole placement or similar), or iteratively for arriving at a good tradeoff between comfort and vehicle agility.

According to an illustrative example, the upper-level control system has a predetermined number of responsiveness states available which is can choose from. The states may, e.g., comprise an extra agile state by which complicated maneuvers can be performed under time constraints, and a more comfort-oriented state associated with more slow control and perhaps also an increased energy efficiency.

According to an aspect beyond the scope of the claims, the upper-level control system corresponds to a vehicle motion management (VMM) function and the lower-level control system corresponds to an MSD control unit. Thus, a vehicle motion management system advantageously obtains an ability to finetune how MSD controllers such as an electric machine controller respond to control commands. For instance, a torque generating device such as an electric machine or a service brake may be placed in an agile mode where a requested change in applied torque is rapidly applied, and otherwise operated in an energy efficient mode of operation, perhaps with a target to reduce component wear or operate at increased energy efficiency.

The upper-level control system corresponds to an autonomous drive (AD) control function and the lower-level control system corresponds to the VMM function of the previous example. Thus, by the same mechanism, the AD controller is able to configure the responsiveness of the VMM function. Thus, if the vehicle is in a normal driving mode where comfort and energy efficiency is a priority, then the desired control bandwidth can be configured accordingly. However, if the vehicle enters into an undesired situation, such as an emergency, then the VMM function can be configured in an agile mode of operation where the vehicle is much more responsive but may be less comfortable to a passenger. The upper-level control system can also use the functionality to finetune control bandwidths in a cascaded control system such as to avoid interference in between the different control loops. The upper-level control system may use a set of pre-determined desired control bandwidths, or iteratively adapt the control bandwidths to obtain a target behavior from the vehicle.

It is appreciated that the mechanism can be applied at more than one level. Consequently, an AD control function can transmit first data indicative of a desired control bandwidth for use at the VMM function, and the VMM function may transmit second data indicative of a desired control bandwidth for use at the actuator or MSD level.

According to aspects, the upper-level control system is arranged to determine the desired control bandwidth for control of the at least one MSD in dependence of a current traffic situation. This means that, e.g., the upper-level control system also has at least indirect access to perception data indicative of the current environment around the vehicle. For instance, if there are obstacles nearby or if the vehicle surroundings are clear from obstacles with much maneuvering space. This data can be used to determine the desired control bandwidth, akin to a human driver being attentive with the foot on the brake pedal, or more relaxed.

According to aspects, the upper-level control system is arranged to determine the desired control bandwidth for control of the at least one MSD in dependence of a required response time of the at least one MSD. For instance, a maneuver may need to be completed before a deadline, such as if an emergency braking operation is triggered where the vehicle needs to come to a full stop before colliding with an obstacle in the vehicle path. This deadline may be used to determine if the vehicle needs to increase its responsiveness in order to meet the deadline or if a current bandwidth configuration is sufficient.

According to aspects, the upper-level control system is arranged to determine the desired control bandwidth for control of the at least one MSD in dependence of a control stability criterion. Again, advanced vehicle stability control during complex maneuvers may require a responsive vehicle. The type of maneuver and the state of the vehicle can therefore be used to determine a desired control bandwidth.

According to aspects, the upper-level control system is arranged to determine the desired control bandwidth in response to an output of the vehicle model in comparison to a desired response by the vehicle. This way the upper-level control system maintains a model of the actual vehicle, which can be used to evaluate if the current settings are appropriate for the driving situation, or if some adjustment is necessary in order to successfully complete a maneuver. This model evaluation may of course be performed offline, or at least in preparation for a set if given scenarios, which evaluation can then result in pre-determined desired control bandwidths that can be transmitted to the lower-level control system without delay when the need arises. According to an example, an AD control function may comprise a first vehicle model configured to model a response by the vehicle to a control signal comprising a given control bandwidth for control of at least one MSD and a trajectory tracking function configured to track a desired vehicle trajectory by optimization of a cost function which is at least partly based on an output of the first vehicle model.

In this manner an upper-level control system may maintain a model of the vehicle as controlled by a lower-level control system operating with a given parameterization in terms of control bandwidth. The upper-level control system can evaluate if the current behavior is as desired, by executing the model. If there is a discrepancy between the model behavior and a desired behavior, perhaps the vehicle will not be able to come to a full halt in a desired amount of time given the current parameterization, the upper-level control system can transmit updated control parameters to the lower-level control system in order to obtain a vehicle behavior which is closer to the desired vehicle behavior.

There is also disclosed herein control units, methods, computer programs, computer readable media, computer program products, and vehicles associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

With reference to the appended drawings, below follows a more detailed description of embodiments of the invention cited as examples. In the drawings:
- Figure 1: shows an example heavy-duty vehicle;
- Figure 2: schematically illustrates a heavy-duty vehicle control system;
- Figure 3A: shows an example motion support device control arrangement;
- Figure 3B: schematically illustrates an example layered control architecture;
- Figure 4: is a flow chart illustrating an example process for bandwidth control;
- Figure 5: illustrates an example layered vehicle control function architecture;
- Figure 6: schematically illustrates a trajectory tracking process;
- Figure 7: shows a vehicle following a desired trajectory;
- Figure 8: is a flow chart illustrating methods;
- Figure 9: schematically illustrates a control unit; and
- Figure 10: shows an example computer program product.

### DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

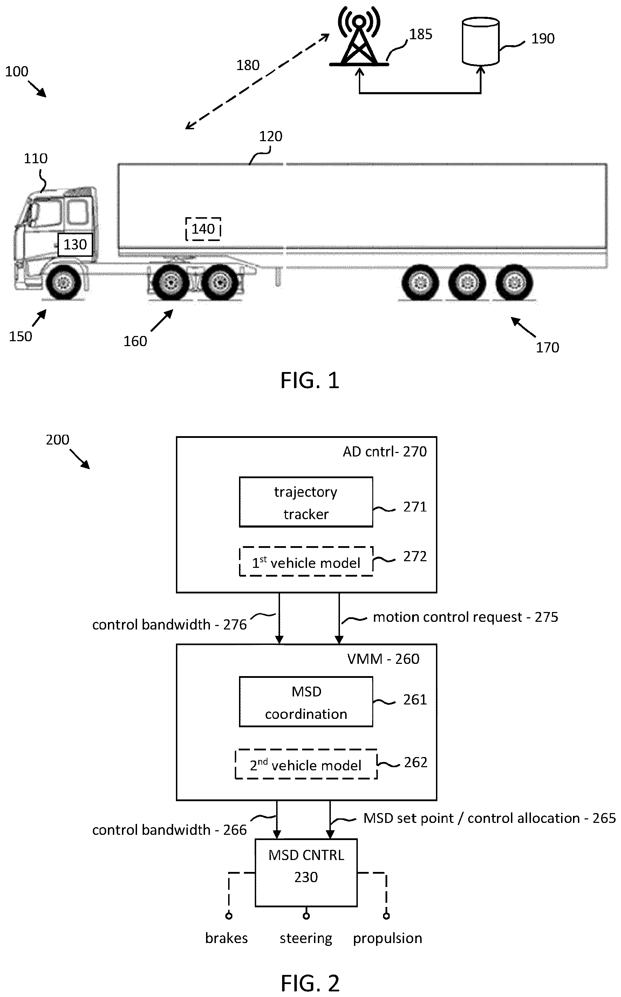

Figure 1 illustrates an example vehicle 100 for cargo transport where the herein disclosed techniques can be applied with advantage. The vehicle 100 comprises a tractor or towing vehicle 110 supported on front wheels 150 and rear wheels 160, at least some of which are driven wheels and at least some of which are steered wheels. Normally but not necessarily, all the wheels on the tractor are braked wheels. The tractor 110 is configured to tow a first trailer unit 120 supported on trailer wheels 170 by a fifth wheel connection in a known manner. The trailer wheels are normally braked wheels but may also comprise driven wheels on one or more axles. Some trailers also comprise steered wheels in order to improve maneuverability.

It is appreciated that the herein disclosed methods and control units can be applied with advantage also in other types of heavy-duty vehicles, such as rigid trucks, trucks with drawbar connections, construction equipment, buses, and the like. The vehicle 100 may also comprise more than two vehicle units, i.e., a dolly vehicle unit may be used to tow more than one trailer. The vehicle combination of vehicle units may of course comprise more than one steered axle.

The tractor 110 comprises a vehicle control unit (VCU) 130 for controlling various kinds of functionality, i.a., to achieve propulsion, braking, and steering. Some trailer units 120 also comprise a VCU 140 for controlling various functions of the trailer, such as braking of trailer wheels, and sometimes also trailer wheel propulsion and steering. The VCUs 130, 140 may be centralized or distributed over several processing circuits, often referred to as electronic control units (ECU). Parts of the vehicle control functions may also be executed remotely, e.g., on a remote server 190 connected to the vehicle 100 via wireless link 180 and a wireless access network 185.

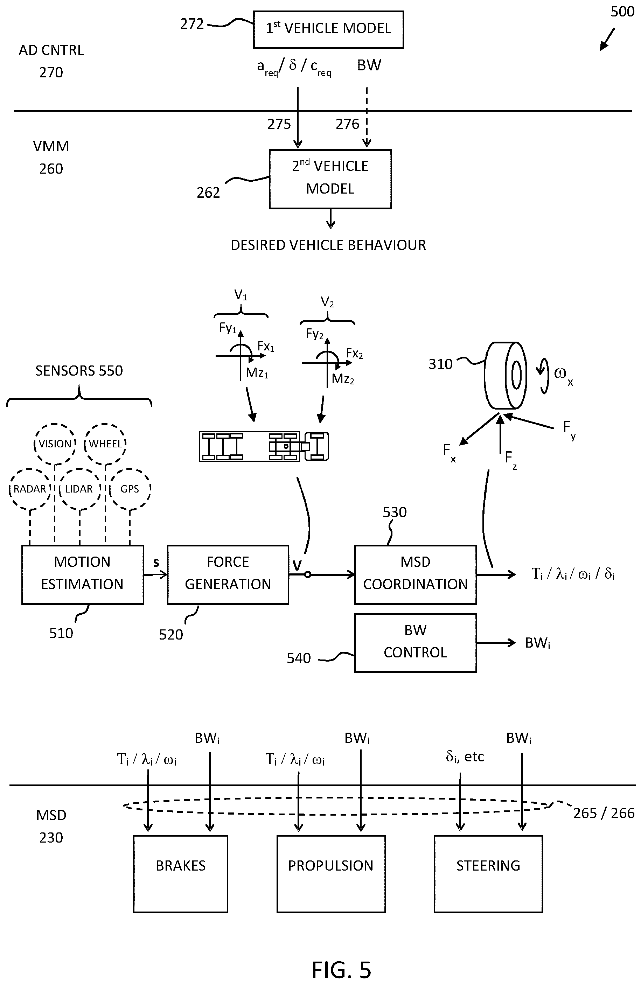

With reference to Figure 2, the VCU 130 on the tractor 110 (and possibly also the VCU 140 on the trailer 120 and/or the remote server 190) may be configured to execute vehicle control methods which are organized according to a layered functional architecture for autonomous drive (AD) or at least semi-autonomous control of the vehicle 100, i.e., advanced driver assistance systems (ADAS). Some functions may be comprised in a higher layer AD control function 270 and some other functionality may be comprised in a vehicle motion management (VMM) domain 260 residing in a lower functional layer (closer to the actuator physical control signals). A VMM function optionally also handles vehicle power management, in which case the function may be referred to as a vehicle motion and power management (VMPM) function, although this part of the functionality will not be discussed in more detail herein. The VMM function will be discussed in more detail below in connection to Figure 5. VMM functionality may also be referred to in the literature as integrated chassis control.

The AD controller 270 performs functions such as trajectory planning and trajectory tracking 271. Advanced driver assistance systems (ADAS) and methods for controlling autonomous drive (AD) by autonomous vehicles normally base vehicle control on some form of path following algorithm. The control system 200 first determines a desired path to be followed by the vehicle, e.g., based on a current transport mission and vehicle environment, together with map data indicating possible routes to take in order to navigate the vehicle from one location to another.

The AD controller 270 may also execute situation avoidance maneuvers (SAM) in response to unexpected events occurring in the vehicle environment or on-board the vehicle 100, such as the sudden appearance of an obstacle along the planned trajectory, or some form of vehicle malfunction. In other words, a SAM is an emergency maneuver such as an emergency brake maneuver which is triggered in case an undesired situation is about to unfold, which it is desired to avoid. It is appreciated that such maneuvers will ideally be performed at much higher control bandwidths compared to normal driving operation, i.e., by a more responsive vehicle.

Path following is the process concerned with how to determine vehicle speed and steering at each instant of time for the vehicle to adhere to a certain target path to be followed. There are many different types of path following algorithms available in the literature, each associated with its respective advantages and disadvantages. Pure pursuit is a well-known path following algorithm which can be implemented with relatively low complexity, it is described, e.g., in "Implementation of the pure pursuit path tracking algorithm," by R.C. Coulter, Carnegie-Mellon University, Pittsburgh PA Robotics INST, 1992. The algorithm computes a set of vehicle controls, comprising steering angle, by which the vehicle moves from its current position towards a point at a predetermined "preview" distance away along the path to be followed. The pure pursuit methods cause the vehicle to "chase" a point along the path separated from the vehicle by the preview distance, hence the name.

Vector field guidance is another path following algorithm which instead bases the vehicle control on a vector field, which vector field is also determined based on a preview distance or look-a-head parameter. Vector field guidance methods were, e.g., discussed by Gordon, Best and Dixon in "An Automated Driver Based on Convergent Vector Fields", Proc. Inst. Mech. Eng. Part D, vol. 216, pp 329-347, 2002.

The configuration of the preview distance determines how strongly the vehicle responds to changes in input data, such as a path following error. A long preview distance results in a smoother vehicle control with less abrupt actuation, while a shorter preview distance provides higher bandwidth control with more jerky motion.

Generally, the path following process can be configured to follow the desired path with high control bandwidth, which may result in "jerky" vehicle motion that closely follows the desired path with small error, but with some discomfort to any vehicle occupants. Alternatively, the path following process can be configured to operate at a lower control bandwidth, which will result in more slow responses to changes in input, and often a larger path following error, albeit with a more comfortable vehicle motion. Hence, it is appreciated that control bandwidth is an important parameter to set in order to obtain a desired vehicle behaviour. This control bandwidth is normally fixed and carefully configured so as to prevent the different controllers from interfering with each other. However, this fixed configuration is undesired since some traffic situations may require a fast response and uncomfortable response by the vehicle, e.g., in order to be able to stop the vehicle in time or avoid some obstacle, while a lower control bandwidth is desired in order to obtain a more energy efficient and comfortable vehicle motion.

It is also appreciated that the vehicle behavior will be affected by its suspension. Thus, herein, active suspension can in some cases be considered as part of the vehicle collection of MSDs.

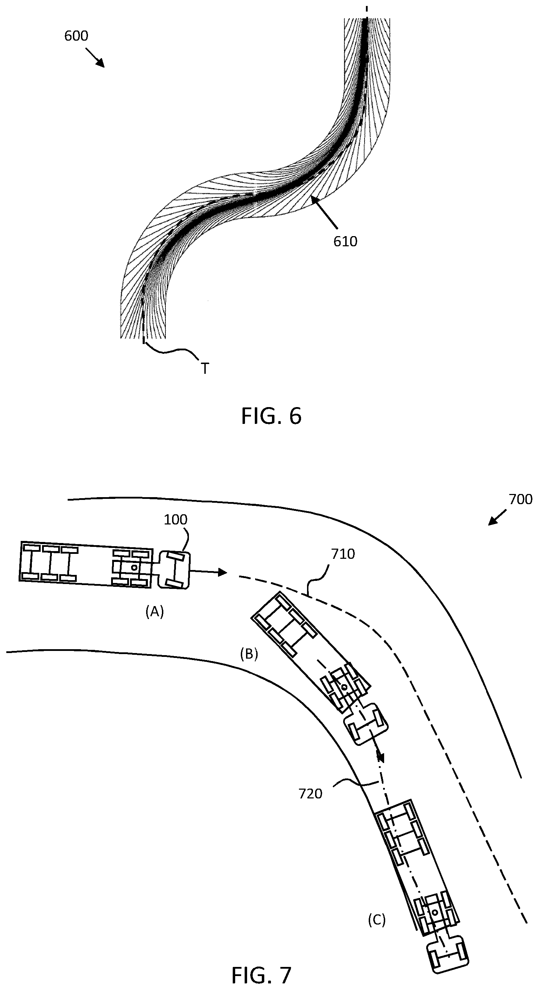

Figure 6 illustrates an example of a vector field guidance trajectory tracking process 600. A desired vehicle trajectory T, shown as a dashed line, first makes a turn to the right, followed by a turn to the left. The vector field associated with this desired vehicle trajectory is indicated by reference numeral 610. A control system 130, 140 for autonomous drive of a heavy-duty vehicle 100 can be arranged to make the vehicle 100 adhere to the desired vehicle trajectory T without jeopardizing vehicle safety, by adjusting the steering and the propulsion of the vehicle. This vector field may be optimized for energy efficiency and/or driver comfort but may not be sufficient for successfully executing an emergency maneuver or the like. Also, it is most likely not sufficient to simply change the vector field at the higher layer, since then the lower layer controller bandwidths may be erroneously configured, which potentially can result in control instability.

With continued reference to Figure 2, The AD controller 270 generates a motion control request 275 which is sends down to the VMM function 260. The motion request may comprise data related to a desired acceleration profile and/or a desired curvature to be followed by the vehicle 100. The generation of such a motion request signal is known in the art and will therefore not be discussed in more detail herein. The VMM function performs MSD coordination 261 (an example of which will be discussed in more detail below in connection to Figure 5). This MSD coordination results in a number of MSD set points 265, i.e., an MSD control allocation, which can be fed to the different MSD controllers on the vehicle 100 in order to control the physical actuators on the vehicle.

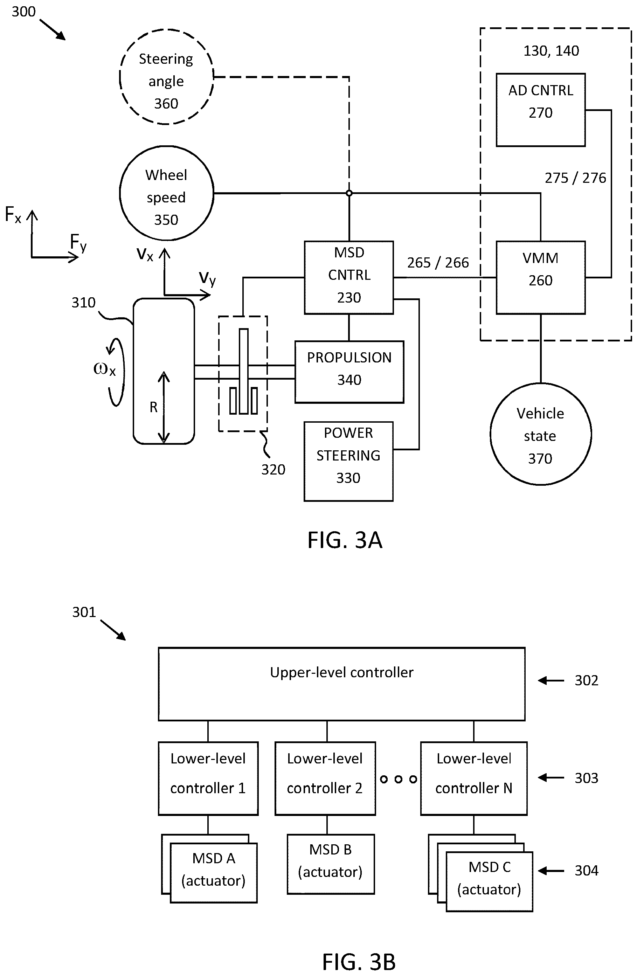

Figure 3A schematically illustrates functionality 300 for controlling an example wheel 310 on the vehicle 100 by some example MSDs here comprising a friction brake 320 (such as a disc brake or a drum brake), a propulsion device 340 and a steering arrangement 330. The friction brake 320 and the propulsion device are examples of wheel torque generating devices, which can be controlled by one or more motion support device control units 230. The control is based on, e.g., measurement data obtained from a wheel speed sensor 350 and from other vehicle state sensors 370, such as radar sensors, lidar sensors, and also vision based sensors such as camera sensors and infra-red detectors. An MSD control unit 230 may be arranged to control one or more actuators. For instance, it is not uncommon that an MSD control unit 230 is arranged to control both wheels on an axle. Each MSD has a number of set-points which represent input data that control the behavior of the MSD. The VMM function 260 is arranged to coordinate the various MSDs to obtain a vehicle behavior in line with that expected by the AD controller 270. The functionality 300 for instance comprises control of steering angle δ via the power steering arrangement 330. The MSD control unit 230 receives information related to the current steering angle, either directly from an optional steering angle sensor 360 or indirectly via a model of steering angle as function of steering angle control input generated by the MSD control unit 230.

The AD controller 270 plans driving operation with a time horizon of 10 seconds or so. This time frame corresponds to, e.g., the time it takes for the vehicle 100 to negotiate a curve or the like. The vehicle maneuvers, planned and executed by the AD controller, can be associated with acceleration profiles and curvature profiles which describe a desired target vehicle velocity in the vehicle forward direction and turning to be maintained for a given maneuver. The AD controller continuously requests the desired acceleration profiles a_{req} and steering angles (or curvature profiles c_{req}) from the VMM function 260 which performs force allocation to meet the requests from the AD controller in a safe and robust manner. The VMM function 260 optionally continuously feeds back capability information to the AD controller 270 detailing the current capability of the vehicle in terms of, e.g., forces, maximum velocities, and accelerations which can be generated. The VMM function 260 operates on a timescale of below one second or so.

Figure 3B schematically illustrates a more general layered control architecture 300 where an upper-level controller is arranged to control the operation of a plurality N of lower-level controllers. Each lower-level controller then controls one or more actuators, or MSDs, such as propulsion devices, steering devices, suspension systems, brakes, and so on (indicated in the Figure as MSD A, MSD B and MSD C). Since each controller implements some form of control loop, the system in Figure 3B may be referred to as a cascaded control loop system. In cascaded control loops, one consideration needs to be that the control loops don't "fight" (counter-act) each other, which can happen if the controllers are operating on similar time constants or control bandwidths.

Generally, herein, a control loop bandwidth or a control loop time constant refers to how fast the control loop responds to a change in the operating inputs of the loop. A control loop associated with high bandwidth responds fast to a change in input signals, while a control loop associated with a smaller control bandwidth takes more time to respond. A low control bandwidth is often associated with better noise suppression compared to a high bandwidth control loop.

It is appreciated that a desired control bandwidth for control of at least one MSD may comprise different types of information, all having the purpose of adapting the responsiveness to control commands received from a higher layer control algorithm. For instance, the desired control bandwidth may be indicated by a filter constant, such as a first or second order system parameter and/or a corner frequency of a loop filter characteristic.

The desired control bandwidth may also be indicated by a characteristic frequency of the maneuver, e.g., a control phase delay could be optimized at the requested frequency.

The desired control bandwidth may furthermore be indicated by one or more vehicle parameters, such as a vehicle wheelbase value, a vehicle unit inertia, or some parameters of a simplified vehicle model, such as a spring-damper system.

The desired control bandwidth may also comprise a set of pre-determined parameters for use at the lower layer. This would then be akin to parameterizing a software driver for use by the upper-level control system is using the lower-level control system. The lower layer may be configured to share its parameterization with the higher layer, along with a description of the behavior obtained for various settings.

The perhaps most simple way of specifying the data indicative of the desired control bandwidth for control of the at least one MSD is to use a pre-determined set of behavioral states, such as the three levels comfort, agility, and emergency. In other words, the data indicative of the desired control bandwidth is selected from a set of predetermined control bandwidths.

There is a trade-off between controlling everything on the highest level ("vehicle in traffic") which makes it possible to consider the effects of a control action on the surroundings and controlling mostly on the lower-levels close to the actuators, which usually enables quicker and more targeted controllers.

This trade-off is also informed by the driving situation - slower control close to the actuators might be acceptable for energy-efficient driving but needs to be overridden by fast control loops in the case of emergency braking, for example, such as when executing a SAM or the like.

Problems with cascaded control loops are often solved by either preventing several controllers from being cascaded (closing the loop only in one place), or by carefully tuning the control loops (in terms of control loop bandwidth) until they work together as intended or artificially slowing parts of the controllers down, so they do not actuate on the same time scale. This however, results in a system which cannot adapt control bandwidth according to situation.

To improve the operation in a layered control architecture involving several controllers working together, it is proposed herein to transmit either a time-constant for a controller, or a control bandwidth (frequency a lower-level controller may close the loop at, upper and lower boundary) to prevent different controllers from counteracting each other. A tuned cost function can also be transmitted in case one or more controllers are based on optimization of respective cost functions. The tuned cost function can, e.g., be adapted to prioritize responsiveness by the vehicle to motion control commands, or comfort and energy efficiency.

In the interface between a higher-level controller 302 and a lower-level controller 303, additional signals can be defined for the upper layers in the stack to shape the behaviour of the closed-loop-controllers on the lower-level. By setting either a time constant or desired response time, or alternatively a control bandwidth, the upper layers can shape how they want the lower parts to respond in a given traffic situation.

This can either mean requesting as-quick-as-possible responses, closed-loop, or on the opposite end of the spectrum, disable any kind of feedback/closed-loop behaviour, even extremely slow parameter estimators (working on time constants of tens of seconds).

Usually, there is a request being sent down from the upper-level controller to the lower-level controller. The proposal herein is to attach data associated with a desired time-constant or control loop responsiveness to that request, so the upper-level controller can speed up or slow down the closed-loop control action on the lower-level. The decision making for this would be based on the accuracy required, but also heavily influenced by the safety level - high-integrity control might be desirable to execute in a single place in the stack, but in situations that are not safety critical, more lenient control might be desirable to handle close to the actuators.

This approach assumes a shared responsibility of multiple layers for ensuring the correct (and, therefore, safe) action of the vehicle. The upper layers of the control loop can only act as quickly as the lower layers "allow" them to act. This is desirable, as it enables the lower layers to control in a more relaxed and therefore efficient or comfortable manner.

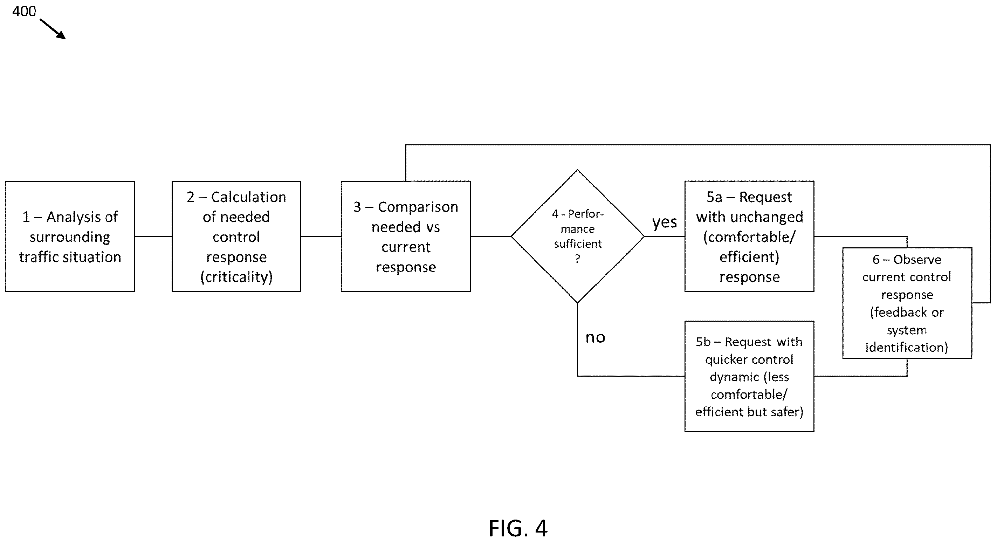

An example process for decision making and adjustment of the needed control response is outlined in the flow chart 400 in Figure 4.
1: The example system first perceives the current traffic situation and decides on needed braking/steering manoeuvre capability by the vehicle to ensure safety. If there are no immediate threats to the vehicle, such as obstacles or an undesired vehicle state, then the manoeuvring capability by the vehicle will not be exceptionally large. However, if a threat is detected, or if the vehicle is about to enter into some undesired state (such as extensive wheel slippage) which is to be avoided, then more manoeuvring capability may be desired.
2: The system then calculates what control response capability that is required. For instance, what level of deceleration is needed in order to stop in time, which includes a certain system dynamic (there's slowness in any response, but in these cascaded loops, the lower level might act even slower than the physics mandate). This could also take form of an overall stopping distance given the system response and maximum deceleration, or similar.
3: The system then compares the desired performance to the current performance, in order to see if adjustments need to be made to the control response characteristics of the vehicle.
5a: If it is determined (in 4) that the current system response is sufficient, the request to the lower-level controller is made with the existing control dynamic - this allows the lower controller to keep controlling in the most comfortable or efficient manner.
5b: If it is instead determined (in 4) that the current system response is insufficient, then the request towards the lower-level controller is "sharpened", by transmitting a request for a changed control behaviour - in control terms, this might be a response time, pole/zero placement, or even P-I-D-control constants.
6. The response by the vehicle is then observed and fed back to the comparison in (3) to determine the current control response as a basis for the continuous decision making.

Referring back to Figure 2, during both trajectory planning and trajectory tracking, it is helpful to be able to reliably predict the response of the vehicle to a given control input, such as an applied steering wheel angle, in order to follow a desired vehicle trajectory more closely. Herein, if nothing else is explicitly stated, a steering angle is defined as an average road to wheel angle of a steered axle, i.e., accounting for road wheel angle differences of the two steered wheels of a steered axle due to Ackermann geometries and the like. It is furthermore appreciated that wheels may be individually steerable in some vehicle designs, i.e., the two wheels of a steered axle may be possible to steer independently of each other and may also comprise independently actuated wheel-end electric motors. Towards this end, the AD controller 270 comprises a first vehicle model 272, which models vehicle behavior in response to a given set of input commands, such as a requested steering angle, for a given set of control loop bandwidths. The first vehicle model may be a static vehicle model or a more advanced dynamic vehicle model. Generally, a vehicle model is classified as dynamic if its behavior at a given instant depends not only on the present inputs but also on the past inputs. A dynamic model is said to have memory or inertia. A dynamic system is most often described by one or several differential equations, one or several difference equations, one or several algebraic equations with a time lag. In a static vehicle model, the state and the output at a given instant depends only on the input at this instant. The relation between the input and the output is then given by one or several algebraic equations. This first vehicle model 272 allows the higher layer control function to evaluate if the current bandwidth setting communicated to the lower layers is sufficient for obtaining the desired vehicle motion, or if some adjustment needs to be made. For instance, if the AD controller 270 enters into an emergency maneuver, such as a hard braking maneuver which also comprises turning, then an increase in the control bandwidth configured 276 at the lower layer controller may be necessary, which the first model will indicate.

Similarly, the VMM function also comprises an optional second vehicle model 262, which can be aligned with the first vehicle model 272 used by the AD controller 270. This vehicle model 262 allows the VMM function to also determine a desired vehicle behavior, i.e., how the AD controller expects the vehicle to behave in response to a steering angle request or some other motion control request 275. To align the different models, the two models may be arranged to perform a handshake procedure where they exchange and negotiate model parameters related to the vehicle, and potentially also a vehicle state space. For instance, the VMM function 260 may be in possession of vehicle data such as gross cargo weight and other dynamic properties of the vehicle 100, which it then shares with the first vehicle model 272 in order to align the two models with each other. This alignment can be performed as the vehicle is powered up and can also be periodically updated. For instance, the VMM function 260 may continuously update the first vehicle model on vehicle data such as estimated tyre wear, the state of the suspension of the vehicle, and the different capabilities of the motion support devices on the vehicle. This optional second vehicle model 262 can be used to determine a set of desired control bandwidths 266 to be used at the MSD control level in order to obtain the vehicle motion characteristics desired at the AD controller level. The actual vehicle states considered by the VMM function 260 may include any of lateral position of a point on a unit, yaw rate of a unit, lateral acceleration of a unit, lateral velocity of a unit, and body sideslip of a unit. These states may be directly measured by various sensors or estimated indirectly based on related states.

According to aspects, the VMM function 260 may implement a local copy of the first vehicle model 272 used by the AD controller 270. The VMM function is then able to compare the predicted vehicle behavior for a given set of input control commands (such as a steering angle request) to the actual vehicle behavior obtained as a result of processing the steering angle request. The VMM function 260 may then transmit correction factors to the AD controller, allowing it to calibrate its first vehicle model against the actual response by the vehicle to the input control commands. This will further reduce the difference between the vehicle response to some control input expected by the AD controller, and the response to the control input obtained from the vehicle.

In "Driver-centered Motion Control of Heavy Trucks", Chalmers University of Technology, PhD thesis 2017, Tagesson discusses the mechanics and modelling of modern steering arrangements for heavy-duty vehicles, as well as some of the error sources associated with steering a heavy-duty vehicle.

In "Design of Variable Vehicle Handling Characteristics Using Four-Wheel Steer-by-Wire", IEEE transactions on control systems technology, vol. 24, no. 5, 2015, Russel and Gerdes proposes use of a vehicle model to determine desired vehicle behavior in response to human driver input. The approaches taken here may be adapted for use in the present control context, in particular in modelling vehicle behavior in response to control commands at different control bandwidth settings.

To summarize the discussion so far, a control system 130, 140, 301 for motion management of a heavy-duty vehicle 100 is proposed which comprises an upper-level control system 302 and a lower-level control system 303. The upper-level control system 302 is arranged to obtain a desired motion behavior by the vehicle 100 and to transmit one or more control signals adapted for control of at least one MSD to the lower-level control system 303 in dependence of the desired motion behavior by the vehicle 100. The one or more control signals transmitted from the upper-level control system 302 to the lower-level control system 303 comprises data indicative of a desired control bandwidth for control of the at least one MSD. The lower-level control system 303 is arranged to receive the control signals and to control the at least one MSD in dependence of the desired control bandwidth. Thus, upper-level control system 302 desires a more responsive vehicle, then the upper-level control system 302 can communicate this to the lower-level controller via the data indicative of the desired control bandwidth.

Generally, the desired motion behavior by the vehicle may corresponds to a responsive behavior suitable for an emergency maneuver, or a more relaxed and less responsive energy efficient behavior which perhaps is also associated with an increased level of comfort for a passenger in the vehicle. Also, some types of cargo may be sensitive to abrupt jerk and hard acceleration, which may be undesired unless required to ensure safety of the vehicle.

The upper-level control system 302 may, e.g., corresponds to the VMM function 260, and the lower-level control system 303 may correspond to an MSD control unit 230. Alternatively, the upper-level control system 302 may correspond to the AD control function 270, and the lower-level control system 303 instead correspond to the VMM function 260. The concept can also be used for control with more than two levels of controllers. For instance, as indicated in, e.g., Figure 2, the upper-level controller may be an AD controller arranged to communicate control signals and associated control bandwidths to a VMM function, which is turn is connected to one or more MSD control functions.

The upper-level control system 302 is according to some aspects arranged to determine the desired control bandwidth for control of the at least one MSD in dependence of a current traffic situation. Some traffic situations may not require any particular responsiveness by the vehicle, which is then more free to perform energy optimized control at relatively low control bandwidths. However, as soon as something happens which may necessitate higher bandwidth, more responsive, control, the control bandwidths in the system is reconfigured using the bandwidth control signals passing in between the different control levels.

The upper-level control system 302 is optionally arranged to determine the desired control bandwidth for control of the at least one MSD in dependence of a required response time of the at least one MSD. For instance, the upper-level control system may be in a position to determine that the vehicle needs to be stopped within a given period of time in order to not collide with an obstacle. The upper-level control system 302 can then determine if the current control bandwidths configured in the lower-level controllers is sufficient in order to meet the control deadline, or if a more responsive vehicle is required to complete the maneuver successfully with high enough probability.

The upper-level control system 302 is preferably also arranged to determine the desired control bandwidth for control of the at least one MSD in dependence of a control stability criterion. By using models of the vehicle 100, such as the first vehicle model 272 and/or the second vehicle model 262, the control system may be able to determine that a current control bandwidth setting is likely to result in conflicting control, or unstable control, such as oscillating control inputs or the like. The upper-level control system 302 can then find an alternative control bandwidth configuration at the different levels in the control system which does not exhibit such drawbacks, i.e., provides stable control without conflicting controllers.

As discussed above, the upper-level control system 302 comprises a vehicle model 262, 272 configured to model a response by the vehicle 100 to a control signal comprising a given control bandwidth for control of at least one MSD, wherein the upper-level control system 302 is arranged to determine the desired control bandwidth in response to an output of the vehicle model 262, 272 in comparison to a desired response by the vehicle 100.

Also, the AD control function 270 comprises a first vehicle model 262, 272 configured to model a response by the vehicle 100 to a control signal comprising a given control bandwidth for control of at least one MSD and a trajectory tracking function 271 configured to track a desired vehicle trajectory by optimization of a cost function which is at least partly based on an output of the first vehicle model 272.

Figure 5 illustrates an example vehicle control function architecture, where an AD controller 270 generates vehicle motion requests 275, which comprises a desired steering angle δ or an equivalent curvature to be followed by the vehicle, and which may optionally also comprise desired vehicle unit accelerations a_{req} other types of vehicle motion requests, which together describe a desired motion by the vehicle along a desired path at a desired velocity profile. It is understood that the motion requests can be used as base for determining or predicting a required amount of longitudinal and lateral forces which needs to be generated in order to successfully complete a maneuver. Also, the bandwidth information 276 received from the AD controller is an indication of the response time desired by the vehicle. This desire in response time is used by the VMM function 260 to set bandwidth requests BWᵢ for the different MSD controllers 230. This is done in the BW control module 540. The various operations of the BW control module 540 was discussed above.

The VMM function 260 operates with a time horizon of about 1 second or so, and continuously transforms the acceleration profiles a_{req} and curvature profiles c_{req} from the AD controller 270 into control commands for controlling vehicle motion functions, actuated by the different MSDs of the vehicle 100 which report back capabilities to the VMM, which in turn are used as constraints in the vehicle control. The VMM function 260 performs vehicle state or motion estimation 510, i.e., the VMM function 260 continuously determines a vehicle state s comprising positions, speeds, accelerations, and articulation angles of the different units in the vehicle combination by monitoring operations using various sensors 550 arranged on the vehicle 100, often but not always in connection to the MSDs.

The result of the motion estimation 510, i.e., the estimated vehicle state s, is input to a force generation module 520 which determines the required global forces V=[V₁, V₂] for the different vehicle units to cause the vehicle 100 to move according to the requested acceleration and curvature profiles a_{req}, c_{req}, and to behave according to the desired vehicle behavior. The required global force vector V is input to an MSD coordination function 530 which allocates wheel forces and coordinates other MSDs such as steering and suspension. The MSD coordination function outputs an MSD control allocation for the i:th wheel, which may comprise any of a torque Tᵢ, a longitudinal wheel slip λᵢ, a wheel rotational speed ωᵢ, and/or a wheel steering angle δᵢ. The coordinated MSDs then together provide the desired lateral Fy and longitudinal Fx forces on the vehicle units, as well as the required moments Mz, to obtain the desired motion by the vehicle combination 100. Thus, the response which the AD controller 270 expects from the vehicle 100 based on the output of the first model 272 is also obtained in reality from the physical vehicle, since the VMM function performs MSD control allocation with an objective to obtain the desired behavior.

Figure 7 illustrates a practical example 700 of where the techniques discussed herein may be applied. The vehicle 100 is initially, at position A, travelling on a road and is being controlled to follow a first path 710 (shown by a dashed line). According to the traffic environment the vehicle control can be performed at relatively low control bandwidth, allowing or a comfortable vehicle motion at high energy efficiency. However, at position B something unexpected happens, such as the appearance of an unexpected obstacle or a malfunction in some critical vehicle component. This event necessitates vehicle control at higher responsiveness. Consequently, the upper-level controller sends a control command to the lower-level controllers to increase the control bandwidth, which allows the upper-level controller to perform more abrupt, less comfortable maneuvering. The upper-level controller is then able to control the vehicle 100 along an alternative trajectory 720 (shown by a dash-dotted line), which comprises relatively high lateral forces and strong deceleration. This trajectory enables controlling the vehicle 100 to quickly move to the side of the road stop at position C in a safe although uncomfortable and energy inefficient manner.

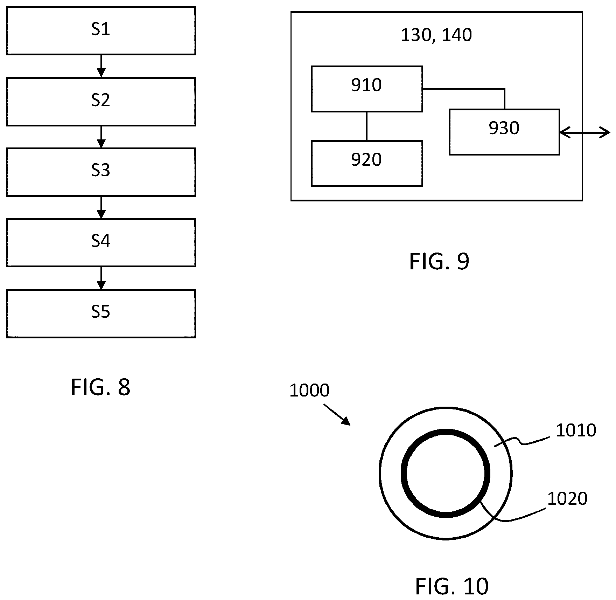

Figure 8 is a flow chart illustrating methods which summarize at least some of the discussions above. There is illustrated a computer implemented method for motion management of a heavy-duty vehicle 100. The method comprises
configuring S1 an upper-level control system 302 and a lower-level control system 303,
obtaining S2, by the upper-level control system 302, a desired motion behavior by the vehicle 100,
transmitting S3, by the upper-level control system 302, one or more control signals adapted for control of at least one MSD to the lower-level control system 303 in dependence of the desired motion behavior by the vehicle 100,
wherein the one or more control signals transmitted from the upper-level control system 302 to the lower-level control system 303 comprises data indicative of a desired control bandwidth for control of the at least one MSD,
receiving S4 the control signals at the lower-level control system 303, and
controlling S5 the at least one MSD in dependence of the desired control bandwidth.

Figure 9 schematically illustrates, in terms of a number of functional units, the components of a control unit such as any of the VCUs 130, 140. The control unit may implement one or more of the above discussed functions of the AD controller 270, VMM 260 and/or the MSD control function 230, according to embodiments of the discussions herein. The control unit is configured to execute at least some of the functions discussed above for control of a heavy-duty vehicle 100. Processing circuitry 910 is provided using any combination of one or more of a suitable central processing unit CPU, multiprocessor, microcontroller, digital signal processor DSP, etc., capable of executing software instructions stored in a computer program product, e.g., in the form of a storage medium 920. The processing circuitry 910 may further be provided as at least one application specific integrated circuit ASIC, or field programmable gate array FPGA.

Particularly, the processing circuitry 910 is configured to cause a control unit to perform a set of operations, or steps, such as the methods discussed in connection to Figure 8. For example, the storage medium 920 may store the set of operations, and the processing circuitry 910 may be configured to retrieve the set of operations from the storage medium 920 to cause the control unit 130, 140 to perform the set of operations. The set of operations may be provided as a set of executable instructions. Thus, the processing circuitry 910 is thereby arranged to execute methods as herein disclosed.

The storage medium 920 may also comprise persistent storage, which, for example, can be any single one or combination of magnetic memory, optical memory, solid state memory or even remotely mounted memory.

The control unit 130, 140 may further comprise an interface 930 for communications with at least one external device. As such the interface 930 may comprise one or more transmitters and receivers, comprising analogue and digital components and a suitable number of ports for wireline or wireless communication.

The processing circuitry 910 controls the general operation of the control unit 130, 140, e.g., by sending data and control signals to the interface 930 and the storage medium 920, by receiving data and reports from the interface 930, and by retrieving data and instructions from the storage medium 920. Other components, as well as the related functionality, of the control node are omitted in order not to obscure the concepts presented herein.

According to a first example, the processing circuitry 910 is adapted to implement an upper-level control system 302 according to the above discussion, where the upper-level control system 302 is arranged to obtain a desired motion behavior by the vehicle 100 and to transmit one or more control signals adapted for control of at least one (MSD) to a lower-level control system 303 in dependence of the desired motion behavior by the vehicle 100, where the one or more control signals transmitted from the upper-level control system 302 to the lower-level control system 303 comprises data indicative of a desired control bandwidth for control of the at least one MSD.

According to a second example, the processing circuitry 910 is adapted to implement a lower-level control system 303 as discussed above, where the lower-level control system 303 is arranged to receive one or more control signals from an upper-level control system 302 indicative of a desired motion behavior by the vehicle 100, and where the one or more control signals transmitted from the upper-level control system 302 to the lower-level control system 303 comprises data indicative of a desired control bandwidth for control of the at least one MSD.

Figure 10 illustrates a computer readable medium 1010 carrying a computer program comprising program code means 1020 for performing the methods illustrated in Figure 8, when said program product is run on a computer. The computer readable medium and the code means may together form a computer program product 1000.

## Claims

1. A control system (130, 140, 301) for motion management of a heavy-duty vehicle (100), the control system comprising
an upper-level control system (302) and a lower-level control system (303), where the upper-level control system (302) corresponds to an autonomous drive, AD, control function (270), and where the lower-level control system (303) corresponds to a vehicle motion management, VMM, function (260),
where the upper-level control system (302) is arranged to obtain a desired motion behavior by the vehicle (100) and to transmit one or more control signals adapted for control of at least one motion support device, MSD, to the lower-level control system (303) in dependence of the desired motion behavior by the vehicle (100),
wherein the one or more control signals transmitted from the upper-level control system (302) to the lower-level control system (303) comprises data indicative of a desired control bandwidth for control of the at least one MSD,
where the lower-level control system (303) is arranged to receive the control signals and to control the at least one MSD in dependence of the desired control bandwidth,
wherein the AD control function (270) comprises a first vehicle model (262, 272) configured to model a response by the vehicle (100) to a control signal comprising a given control bandwidth for control of at least one MSD and a trajectory tracking function (271) configured to track a desired vehicle trajectory by optimization of a cost function which is at least partly based on an output of the first vehicle model (272).

2. The control system (130, 140, 301) according to any previous claim, wherein the upper-level control system (302) is arranged to determine the desired control bandwidth for control of the at least one MSD in dependence of a current traffic situation.

3. The control system (130, 140, 301) according to any previous claim, wherein the upper-level control system (302) is arranged to determine the desired control bandwidth for control of the at least one MSD in dependence of a required response time of the at least one MSD.

4. The control system (130, 140, 301) according to any previous claim, wherein the upper-level control system (302) is arranged to determine the desired control bandwidth for control of the at least one MSD in dependence of a control stability criterion.

5. The control system (130, 140, 301) according to any previous claim, wherein the upper-level control system (302) is arranged to determine the desired control bandwidth in response to an output of the vehicle model (262, 272) in comparison to a desired response by the vehicle (100).

6. The control system (130, 140, 301) according to any previous claim, wherein the desired motion behavior by the vehicle (100) corresponds to a responsive behavior suitable for an emergency maneuver.

7. The control system (130, 140, 301) according to any previous claim, wherein the desired motion behavior by the vehicle (100) corresponds to an energy efficient behavior.

8. The control system (130, 140, 301) according to any previous claim, wherein the desired motion behavior by the vehicle (100) is associated with a passenger comfort level.

9. The control system (130, 140, 301) according to any previous claim, wherein the at least one MSD comprises any of: a torque generating device such as an electric machine (340) and/or a service brake (320), a steering device (330), or a suspension system of the heavy-duty vehicle (100).

10. The control system (130, 140, 301) according to any previous claim, wherein the data indicative of the desired control bandwidth is selected from a set of predetermined control bandwidths.

11. A computer implemented method for motion management of a heavy-duty vehicle (100), the method comprising
configuring (S1) an upper-level control system (302) and a lower-level control system (303), where the upper-level control system (302) corresponds to an autonomous drive, AD, control function (270), and where the lower-level control system (303) corresponds to a vehicle motion management, VMM, function (260),
wherein the AD control function (270) comprises a first vehicle model (262, 272) configured to model a response by the vehicle (100) to a control signal comprising a given control bandwidth for control of at least one MSD and a trajectory tracking function (271) configured to track a desired vehicle trajectory by optimization of a cost function which is at least partly based on an output of the first vehicle model (272),
obtaining (S2), by the upper-level control system (302), a desired motion behavior by the vehicle (100),
transmitting (S3), by the upper-level control system (302), one or more control signals adapted for control of at least one motion support device, MSD, to the lower-level control system (303) in dependence of the desired motion behavior by the vehicle (100),
wherein the one or more control signals transmitted from the upper-level control system (302) to the lower-level control system (303) comprises data indicative of a desired control bandwidth for control of the at least one MSD,
receiving (S4) the control signals at the lower-level control system (303), and
controlling (S5) the at least one MSD in dependence of the desired control bandwidth.

## Patentansprüche

1. Steuersystem (130, 140, 301) zum Bewegungsmanagement eines Schwerlastfahrzeugs (100), wobei das Steuersystem umfasst:
ein übergeordnetes Steuersystem (302) und ein untergeordnetes Steuersystem (303), wobei das übergeordnete Steuersystem (302) einer Steuerfunktion (270) für autonomes Fahren, AD, entspricht, und wobei das untergeordnete Steuersystem (303) einer Funktion (260) für Fahrzeugbewegungsmanagement, VMM, entspricht,
wobei das übergeordnete Steuersystem (302) dazu eingerichtet ist, ein gewünschtes Bewegungsverhalten des Fahrzeugs (100) zu erhalten und in Abhängigkeit von dem gewünschten Bewegungsverhalten des Fahrzeugs (100) ein oder mehrere Steuersignale, die zur Steuerung mindestens einer Bewegungsunterstützungseinrichtung, MSD, ausgelegt sind, an das untergeordnete Steuersystem (303) zu übermitteln,
wobei das eine oder die mehreren vom übergeordneten Steuersystem (302) an das untergeordnete Steuersystem (303) übermittelten Steuersignale Daten umfassen, die eine gewünschte Regelbandbreite zur Steuerung der mindestens einen MSD anzeigen,
wobei das untergeordnete Steuersystem (303) dazu eingerichtet ist, die Steuersignale zu empfangen und die mindestens eine MSD in Abhängigkeit von der gewünschten Regelbandbreite zu steuern,
wobei die AD-Steuerfunktion (270) ein erstes Fahrzeugmodell (262, 272) umfasst, das dazu konfiguriert ist, eine Reaktion des Fahrzeugs (100) auf ein Steuersignal zu modellieren, das eine vorgegebene Regelbandbreite zur Steuerung mindestens einer MSD umfasst, sowie eine Bewegungsbahnverfolgungsfunktion (271), die dazu konfiguriert ist, eine gewünschte Fahrzeugbewegungsbahn durch Optimierung einer Kostenfunktion zu verfolgen, die zumindest teilweise auf einem Ausgang des ersten Fahrzeugmodells (272) basiert.

2. Steuersystem (130, 140, 301) nach einem vorhergehenden Anspruch, wobei das übergeordnete Steuersystem (302) dazu eingerichtet ist, die gewünschte Regelbandbreite zur Steuerung der mindestens einen MSD in Abhängigkeit von einer aktuellen Verkehrssituation zu bestimmen.

3. Steuersystem (130, 140, 301) nach einem vorhergehenden Anspruch, wobei das übergeordnete Steuersystem (302) dazu eingerichtet ist, die gewünschte Regelbandbreite zur Steuerung der mindestens einen MSD in Abhängigkeit von einer erforderlichen Reaktionszeit der mindestens einen MSD zu bestimmen.

4. Steuersystem (130, 140, 301) nach einem vorhergehenden Anspruch, wobei das übergeordnete Steuersystem (302) dazu eingerichtet ist, die gewünschte Regelbandbreite zur Steuerung der mindestens einen MSD in Abhängigkeit von einem Regelstabilitätskriterium zu bestimmen.

5. Steuersystem (130, 140, 301) nach einem vorhergehenden Anspruch,
wobei das übergeordnete Steuersystem (302) dazu eingerichtet ist,
die gewünschte Regelbandbreite als Reaktion auf einen Ausgang des Fahrzeugmodells (262, 272) im Vergleich zu einer gewünschten Reaktion des Fahrzeugs (100) zu bestimmen.

6. Steuersystem (130, 140, 301) nach einem vorhergehenden Anspruch, wobei das gewünschte Bewegungsverhalten des Fahrzeugs (100) einem Reaktionsverhalten entspricht, das für ein Notmanöver geeignet ist.

7. Steuersystem (130, 140, 301) nach einem vorhergehenden Anspruch, wobei das gewünschte Bewegungsverhalten des Fahrzeugs (100) einem energieeffizienten Verhalten entspricht.

8. Steuersystem (130, 140, 301) nach einem vorhergehenden Anspruch, wobei das gewünschte Bewegungsverhalten des Fahrzeugs (100) mit einem Fahrgastkomfortniveau verbunden ist.

9. Steuersystem (130, 140, 301) nach einem vorhergehenden Anspruch, wobei die mindestens eine MSD ein beliebiges umfasst aus: einer drehmomenterzeugenden Einrichtung wie einer elektrischen Maschine (340) und/oder einer Betriebsbremse (320), einer Lenkeinrichtung (330) oder einem Federungssystem des Schwerlastfahrzeugs (100).

10. Steuersystem (130, 140, 301) nach einem vorhergehenden Anspruch, wobei die Daten, die die gewünschte Regelbandbreite anzeigen, aus einer Menge vorbestimmter Regelbandbreiten ausgewählt sind.

11. Computerimplementiertes Verfahren zum Bewegungsmanagement eines Schwerlastfahrzeugs (100), wobei das Verfahren umfasst:
Konfigurieren (S1) eines übergeordneten Steuersystems (302) und eines untergeordneten Steuersystems (303), wobei das übergeordnete Steuersystem (302) einer Steuerfunktion (270) für autonomes Fahren, AD, entspricht, und wobei das untergeordnete Steuersystem (303) einer Funktion (260) für Fahrzeugbewegungsmanagement, VMM, entspricht,
wobei die AD-Steuerfunktion (270) ein erstes Fahrzeugmodell (262, 272) umfasst, das dazu konfiguriert ist, eine Reaktion des Fahrzeugs (100) auf ein Steuersignal zu modellieren, das eine vorgegebene Regelbandbreite zur Steuerung mindestens einer MSD umfasst, sowie eine Bewegungsbahnverfolgungsfunktion (271), die dazu konfiguriert ist, eine gewünschte Fahrzeugbewegungsbahn durch Optimierung einer Kostenfunktion zu verfolgen, die zumindest teilweise auf einem Ausgang des ersten Fahrzeugmodells (272) basiert.
Erhalten (S2) eines gewünschten Bewegungsverhaltens des Fahrzeugs (100) durch das übergeordnete Steuersystem (302),
Übermitteln (S3) eines oder mehrerer Steuersignale, die zur Steuerung mindestens einer Bewegungsunterstützungseinrichtung (MSD) geeignet sind, vom übergeordneten Steuersystem (302) an das untergeordnete Steuersystem (303) in Abhängigkeit von dem gewünschten Bewegungsverhalten des Fahrzeugs (100),
wobei das eine oder die mehreren vom übergeordneten Steuersystem (302) an das untergeordnete Steuersystem (303) übermittelten Steuersignale Daten umfassen, die eine gewünschte Regelbandbreite zur Steuerung der mindestens einen MSD anzeigen,
Empfangen (S4) der Steuersignale durch das untergeordnete Steuersystem (303), und
Steuern (S5) der mindestens einen MSD in Abhängigkeit von der gewünschten Regelbandbreite.

## Revendications

1. Système de commande (130, 140, 301) pour la gestion de mouvement d'un véhicule lourd (100), le système de commande comprenant
un système de commande de niveau supérieur (302) et un système de commande de niveau inférieur (303), où le système de commande de niveau supérieur (302) correspond à une fonction de commande de conduite autonome, AD, (270), et où le système de commande de niveau inférieur (303) correspond à une fonction de gestion de mouvement de véhicule, VMM, (260),
où le système de commande de niveau supérieur (302) est agencé pour obtenir un comportement de mouvement souhaité par le véhicule (100) et pour transmettre un ou plusieurs signaux de commande adaptés pour la commande d'au moins un dispositif de support de mouvement, MSD, au système de commande de niveau inférieur (303) en fonction du comportement de mouvement souhaité par le véhicule (100),
dans lequel les un ou plusieurs signaux de commande transmis à partir du système de commande de niveau supérieur (302) au système de commande de niveau inférieur (303) comprennent des données indicatives d'une bande passante de commande souhaitée pour la commande de l'au moins un MSD,
où le système de commande de niveau inférieur (303) est agencé pour recevoir les signaux de commande et pour commander l'au moins un MSD en fonction de la bande passante de commande souhaitée,
dans lequel la fonction de commande AD (270) comprend un premier modèle de véhicule (262, 272) configuré pour modéliser une réponse par le véhicule (100) à un signal de commande comprenant une bande passante de commande donnée pour la commande d'au moins un MSD et une fonction de suivi de trajectoire (271) configurée pour suivre une trajectoire de véhicule souhaitée par optimisation d'une fonction de coût qui est au moins partiellement basée sur une sortie du premier modèle de véhicule (272).

2. Système de commande (130, 140, 301) selon une quelconque revendication précédente, dans lequel le système de commande de niveau supérieur (302) est agencé pour déterminer la bande passante de commande souhaitée pour la commande de l'au moins un MSD en fonction d'une situation de trafic actuelle.

3. Système de commande (130, 140, 301) selon une quelconque revendication précédente, dans lequel le système de commande de niveau supérieur (302) est agencé pour déterminer la bande passante de commande souhaitée pour la commande de l'au moins un MSD en fonction d'un temps de réponse requis de l'au moins un MSD.

4. Système de commande (130, 140, 301) selon une quelconque revendication précédente, dans lequel le système de commande de niveau supérieur (302) est agencé pour déterminer la bande passante de commande souhaitée pour la commande de l'au moins un MSD en fonction d'un critère de stabilité de commande.

5. Système de commande (130, 140, 301) selon une quelconque revendication précédente,
dans lequel le système de commande de niveau supérieur (302) est agencé pour
déterminer la bande passante de commande souhaitée en réponse à une sortie du modèle de véhicule (262, 272) en comparaison avec une réponse souhaitée par le véhicule (100).

6. Système de commande (130, 140, 301) selon une quelconque revendication précédente, dans lequel le comportement de mouvement souhaité par le véhicule (100) correspond à un comportement réactif approprié pour une manœuvre d'urgence.

7. Système de commande (130, 140, 301) selon une quelconque revendication précédente, dans lequel le comportement de mouvement souhaité par le véhicule (100) correspond à un comportement économe en énergie.

8. Système de commande (130, 140, 301) selon une quelconque revendication précédente, dans lequel le comportement de mouvement souhaité par le véhicule (100) est associé à un niveau de confort des passagers.

9. Système de commande (130, 140, 301) selon une quelconque revendication précédente, dans lequel l'au moins un MSD comprend l'un quelconque parmi : un dispositif de génération de couple tel qu'une machine électrique (340) et/ou un frein de service (320), un dispositif de direction (330), ou un système de suspension du véhicule lourd (100).

10. Système de commande (130, 140, 301) selon une quelconque revendication précédente, dans lequel les données indicatives de la bande passante de commande souhaitée sont sélectionnées parmi un ensemble de bandes passantes de commande prédéterminées.

11. Procédé mis en œuvre par ordinateur pour la gestion de mouvement d'un véhicule lourd (100), le procédé comprenant
la configuration (S1) d'un système de commande de niveau supérieur (302) et d'un système de commande de niveau inférieur (303), où le système de commande de niveau supérieur (302) correspond à une fonction de commande de conduite autonome, AD, (270), et où le système de commande de niveau inférieur (303) correspond à une fonction de gestion de mouvement de véhicule, VMM, (260),
dans lequel la fonction de commande AD (270) comprend un premier modèle de véhicule (262, 272) configuré pour modéliser une réponse par le véhicule (100) à un signal de commande comprenant une bande passante de commande donnée pour la commande d'au moins un MSD et une fonction de suivi de trajectoire (271) configurée pour suivre une trajectoire de véhicule souhaitée par optimisation d'une fonction de coût qui est au moins partiellement basée sur une sortie du premier modèle de véhicule (272),
l'obtention (S2), par le système de commande de niveau supérieur (302), d'un comportement de mouvement souhaité par le véhicule (100),
la transmission (S3), par le système de commande de niveau supérieur (302), d'un ou plusieurs signaux de commande adaptés pour la commande d'au moins un dispositif de support de mouvement, MSD, au système de commande de niveau inférieur (303) en fonction du comportement de mouvement souhaité par le véhicule (100),
dans lequel les un ou plusieurs signaux de commande transmis à partir du système de commande de niveau supérieur (302) au système de commande de niveau inférieur (303) comprennent des données indicatives d'une bande passante de commande souhaitée pour la commande de l'au moins un MSD,
la réception (S4) des signaux de commande au niveau du système de commande de niveau inférieur (303), et
la commande (S5) de l'au moins un MSD en fonction de la bande passante de commande souhaitée.
